# EUROPÄISCHE PATENTSCHRIFT

(11) **EP 0 729 868 B1**
(45) Veröffentlichungstag und Bekanntmachung des Hinweises auf die Patenterteilung: **04.04.2001**
(21) Anmeldenummer: 96100998.2
(22) Anmeldetag: 24.01.1996
(51) Int. Cl.: B60R 22/46

(54) **Einen Gurtstraffer aufweisende Sicherheitsgurtanordnung in Kraftfahrzeugen**
Safety belt device for a vehicle having a belt tensioner
Dispositif de ceinture de sécurité pour véhicules avec un tendeur de ceinture

(30) Priorität: 01.02.1995 DE 19503150
(43) Veröffentlichungstag der Anmeldung: 04.09.1996
(73) Patentinhaber: TAKATA (EUROPE) VEHICLE SAFETY TECHNOLOGY GmbH, D-89081 Ulm (DE)
(72) Erfinder: Kopetzky, Robert, D-89173 Lonsee (DE); Wittmann, Robert, D-89233 Neu-Ulm (Reutti) (DE); Bannert, Georg, D-77888 Ummendorf (DE); Wifling, Martin, D-89134 Blaustein (DE); Kempfle, Thomas, D-89346 Bibertal-Schneckenhofen (DE); Diepold, Ulrich, D-89081 Ulm (DE); Wengert, Andreas, D-73557 Mutlangen (DE); Husung, Christian, D-73572 Heuchlingen (DE)
(74) Vertreter: Manitz, Gerhart, Dr.

(56) Entgegenhaltungen:
- EP-A- 0 093 238
- EP-A- 0 093 844
- EP-A- 0 321 960
- EP-A- 0 361 075
- EP-A- 0 470 602
- EP-A- 0 581 288
- EP-A- 0 600 689
- EP-A- 0 638 468
- EP-A- 0 703 125
- WO-A-89/06304
- DE-A- 3 600 004
- DE-A- 4 227 781
- GB-A- 2 180 734
- GB-A- 2 216 776
- GB-A- 2 268 678

## Beschreibung

Die Erfindung betrifft eine einen Gurtstraffer aufweisende Sicherheitsgurtanordnung in Kraftfahrzeugen nach dem Oberbegriff des Patentanspruchs 1.

Aus den Figuren 9 und 10 der EP 0 581 288 A1 ist bereits ein Gurtstraffer für eine derartige Sicherheitsgurtanordnung bekannt. Das Zugband bildet dabei zwischen der Umfangswand des Bandlaufraumes und dem Umfang der Antriebswelle bzw. Antriebsrolle einen sich im wesentlichen über 180° erstreckenden Bogen, der auf der konkaven Seite bei einer unfallbedingten Beschleunigung von einem Druckgas beaufschlagt wird, wodurch entsprechend der frei durchhängenden effektiven Fläche des Zugbandes eine entsprechende Kraft auf das Band in Umfangsrichtung ausgeübt wird, die an der Antriebswelle bzw. Antriebsrolle, auf die es teilweise aufgewickelt ist, ein entsprechendes Drehmoment erzeugt, so daß die Antriebswelle bzw. Antriebsrolle entsprechend in Umlauf versetzt wird. Aufgrund einer bei einer unfallbedingten Beschleunigung einrückenden Kupplung wird so das Drehmoment auf die Gurtaufwickelrolle in Einziehrichtung übertragen.

Die Dimensionierung der einzelnen Bauelemente soll hierbei so sein, daß eine Mindest-Strafflänge des Gurtes von 140 mm erzielt wird. Bevorzugt soll jedoch noch ein eine gewisse zusätzliche Einzugslänge zur Verfügung stehen, so daß der Gurt durch den Gurtstraffer z.B. um maximal 205 mm eingezogen bzw. gestrafft werden kann.

Nach dieser Straffung fällt im allgemeinen der durch die pyrotechnische Ladung nur kurzzeitig erzeugte Druck ab, worauf durch das vom in den Sicherheitsgurt hineinfallenden Fahrzeuginsassen bewirkte Ausziehen des Gurtes die Feststellanordnung auslöst und der Fahrzeuginsasse vom nunmehr gestrafften Gurt sicher festgehalten wird.

Ein besonders wichtiger Aspekt bei derartigen Gurtstraffern besteht darin, die zwischen der Drehmomenterzeugungsvorrichtung und der Antriebsachse der Gurtaufwickelrolle erforderliche Kupplung möglichst raumsparend, aber dennoch äußerst betriebssicher aufzubauen und unterzubringen. Ein Beispiel für eine derartige Kupplung ist der DE-A-44 32 593 zu entnehmen und wird weiter unten anhand von Fig. 1 beschrieben.

Aus der EP 0 600 689 A1 ist ein Gurtstraffer bekannt, bei dem die Kupplungselemente aus auf Scherstiften drehbar angeordneten Rollen bestehen.

Das Ziel der vorliegenden Erfindung besteht darin, eine weitere vorteilhafte Sicherheitsgurtanordnung mit Gurtstraffer der eingangs genannten Gattung anzugeben. Insbesondere sollen derartige einen Gurtstraffer aufweisende Sicherheitsgurtanordnungen vorgeschlagen werden, bei denen die Kupplung zwischen der Drehmomenterzeugungsvorrichtung und der Gurtaufwickelrolle platzsparend und betriebssicher untergebracht sowie einfach aufgebaut ist.

Zur Lösung dieser Aufgabe sind die Merkmale der kennzeichnenden Teile der Patentanspruchs 1 vorgesehen.

Aufgrund dieser Ausbildung ist die Kupplung radial innerhalb der Antriebswelle bzw. Antriebsrolle der Drehmomenterzeugungsvorrichtung und damit äußerst platzsparend untergebracht; dabei ist gleichwohl äußerste Betriebssicherheit gewährleistet. Durch Vermeidung von drehbar anzuordnenden Kupplungsrollen ist der Aufbau wesentlich vereinfacht.

Vorteilhafte Weiterbildungen sind durch die Patentansprüche 2 bis 7 gekennzeichnet.

Die hier beschriebenen Kupplungen eignen sich besonders gut für die in DE-A-44 32 593, DE-A-44 32 594 und DE-A-44 44 775 offenbarten Sicherheits gurt anordnungen

Die Erfindung wird im folgenden beispielsweise anhand der Zeichnung beschrieben; in dieser zeigt :
- Fig. 1: eine den Ausgangspunkt für die vorliegende Erfindung bildende, einem mit einer zündbaren, pyrotechnischen Ladung arbeitenden Gurtstraffer aufweisende Sicherheitsgurtanordung in perspektivischer Explosionsdarstellung.
- Fig. 2: eine etwas vergrößerte perspektivische Darstellung des gleichen Gurtstraffers in zusammengebautem Zustand in perspektivischer Ansicht von der entgegengesetzten Seite wie in Fig. 1,
- Fig. 3: eine mehr von der Seite des Zusatzantriebs her gesehene perspektivische Ansicht des gleichen Gegenstandes, wobei jedoch zum Zwecke der Veranschaulichung die eine stirnseitige Abdeckung des Bandlaufraumes und die Rückzugsfederanordnung fortgelassen sind, und zwar in der Ausgangsposition unmittelbar nach dem Beginn der Zündung der pyrotechnischen Ladung,
- Fig. 4: eine entsprechende Ansicht wie Fig. 3, jedoch während eines bereits in Gang befindlichen Gurtstraffvorganges,
- Fig. 5: eine schematische Schnittansicht einer weiteren Ausführungsform eines Zusatzantriebes mit nur einem flexiblen Zugband,
- Fig. 6: eine schematische Schnittansicht analog Fig. 5 einer weiteren Ausführungsform mit zwei flexiblen Zugbändern,
- Fig. 7: eine aufgeschnittene perspektivische Darstellung der Antriebsrolle eines erfindungsgemäßen Gurtstraffers mit einem Kupplungshohlraum und darin angeordneter Kupplung,
- Fig. 8: eine entsprechende Ansicht wie die Fig. 7, wobei jedoch ausschließlich die aufgeschnittene Antriebsrolle wiedergegeben und die um sie herum bzw. in ihr vorgesehenen Bauelemente weggelassen sind,
- Fig. 9: eine zu Fig. 8 analoge Ansicht, jedoch - statt wie in Fig. 6 schräg von oben - schräg von unten gesehen,
- Fig. 10: einen schematischen Schnitt nach Linie X-X in Fig.9,
- Fig. 11: eine teilweise axiale Schnittansicht einer weiteren vorteilhaften Ausführungsform der Erfindung und
- Fig. 12: eine schematische vergrößerte Schnittansicht nach Linie XII-XII in Figur 11.

Nach den Fig. 1 und 2 besitzt eine Sicherheitsgurtanordnung einen beispielsweise im Bodenbereich eines Fahrgastraumes am Fahrzeugchassis 40 zu befestigenden Halter 11, an dem um eine zentrale Achse 38 drehbar eine Gurtaufwickelrolle 12 angebracht ist, auf die ein Sicherheitsgurt 13 aufgewickelt ist, der sich in der in Fig. 1 nur gestrichelt angedeuteten Weise über ein Gurtschloß 39 und z.B. ein Drahtseil 13' zu einer anderen Stelle des Fahrzeugchassis 40 erstreckt, wobei sich der Sicherheitsgurt 13 in üblicher Weise an den nicht dargestellten Körper eines Fahrzeuginsassen anlegt. Weiter ist rechts oben in Fig. 1 strichpunktiert angedeutet, daß der Sicherheitsgurt 13 auch Bestandteil einer Dreipunkt-Gurtanordnung sein kann.

An der einen Stirnseite der Gurtaufwickelrolle 12 befindet sich eine übliche Rückzugsfederanordnung 14, in der eine nicht dargestellte Rückzugsfeder vorgesehen ist, die auf die Gurtaufwickelrolle 12 ein leichtes Gurt-Einzugsdrehmoment ausübt, so daß der vom Fahrzeuginsassen ausgezogene und angelegte Sicherheitsgurt sich soweit auf die Gurtaufwickelrolle 12 aufrollt, daß er locker am Körper des Fahrzeuginsassen anliegt. Weiter ist insbesondere zwischen dem Halter 11 und der Gurtaufwickelrolle 12 eine übliche und nicht dargestellte Gurtauszugssperre vorgesehen, welche bei einem plötzlichen Anziehen des Sicherheitsgurtes 13 oder bei unfallbedingten Beschleunigungen wirksam wird und die Gurtaufwikkelrolle 12 in der dann vorliegenden Aus- bzw. Einzugsposition festlegt, so daß ein Ausziehen des Sicherheitsgurtes 13 an dieser Position verhindert ist.

Die Rückzugsfederanordnung kann auch an der in den Fig. 1 und 2 mit 14' bezeichneten Stirnseite der Gurtaufwickelrolle 12 bzw. des Halters 11 vorgesehen sein, wozu sich eine in Fig. 1 angedeutete Innenwelle 41 drehbar durch entsprechende zentrale Bohrungen eines im folgenden zu beschreibenden Zusatzantriebs 15 und einer Kupplung 20 zur Gurtaufwikkelrolle 12 erstrecken muß und mit dieser drehfest verbunden ist. Die Anordnung der Rückzugsfederanordnung bei 14' hat den Vorteil, daß sowohl der normale Federantrieb als auch der Zusatzantrieb der Gurtaufwickelrolle 12 von der gleichen Stirnseite her erfolgen.

Nach den Fig. 1 und 2 sind zwischen der bevorzugt bei 14' angeordneten Rückzugsfederanordnung und dem Halter 11 bzw. der Gurtaufwickelrolle 12 ein Zusatzantrieb 15 und eine Kupplung 20 angeordnet.

Nach Fig. 1 und 3 enthält der Zusatzantrieb 15 eine Drehmomenterzeugungsvorrichtung 18, welche eine mit der Drehachse 38 der Gurtaufwikkelrolle 12 koaxiale Antriebswelle 19 umfaßt, auf der konzentrisch eine Antriebsrolle 22 drehfest befestigt ist. Auf die Antriebsrolle 22 sind in der Ansicht der Fig. 1,3 entgegen dem Uhrzeigersinn übereinander zwei aus Federstahlblech von etwa 0,2 mm Dicke bestehende Zugbänder 21 aufgewickelt, die an Befestigungsstellen 25 am Umfang der Antriebsrolle 22 drehfest mit dieser verbunden sind.

In der in Fig. 1, 3 dargestellten Ausgangsposition sind jeweils drei bis vier Lagen eines jeden Zugbandes 21 auf die Antriebsrolle 22 aufgewickelt. Danach erstreckt sich jedes Zugband 21 bogenförmig durch jeweils einen von zwei die Antriebsrolle 22 umgebenden Bandlaufräumen 23 zu jeweils einer Befestigungsstelle 26 am die Umfangswand 30 der Bandlaufräume 23 umgebenden Gehäuses 24.

Der bogenförmig ausgebildete Teil der Zugbänder 21 liegt mit seiner konkaven Fläche in der aus Fig.3 ersichtlichen Ausgangsposition des Gurtstraffers an in radialer Richtung gekrümmt ausgebildeten Dichtwänden 29 an, die mit dem Gehäuse 24 einstückig ausgebildet sind und sich sichelförmig im wesentlichen radial nach innen zu den auf die Antriebsrolle 22 aufgewickelten Lagen der Zugbänder 21 erstrecken und dort jeweils eine sich verjüngende Dichtlippe 31 bilden, die eine Dichtverbindung mit den aufgewickelten Zugbändern 21 gewährleistet.

Im Bereich der Dichtlippen 31 sind zwischen jeder Dichtwand 29 und dem daraufliegenden Zugband 21 stabförmige Dichtelemente 32 angeordnet, welche sich über die gesamte Tiefe der im wesentlichen ebene Stirnwände 51, 52 aufweisenden Bandlaufräume 23 erstrecken. Während die der Gurtaufwickelrolle 12 zugewandte ebene Stirnwand 51, die eine zentrale Durchgangsbohrung 67 besitzt, ebenso wie die Umfangswand 30 einen festen Bestandteil des Gehäuses 24 der Drehmomenterzeugungsvorrichtung 18 bildet, befindet sich die axial gegenüberliegende Stirnwand 52 nach Fig. 1 an einem Deckel 53, der auf die offene Seite des Gehäuses 24 aufsetzbar sowie an ihm befestigbar ist und eine zentrale Bohrung 54 für den Durchgang der Innenwelle 41 zur Rückzugsfederanordnung 14' aufweist. Die Breite der Zugbänder 21 ist so groß, daß sie dichtend und gleitend an den Stirnwänden 51, 52 anliegen und so die Bandlaufräume 23 in zwei durch die Zugbänder 21 gegeneinander abgedichtete Teilräume 23', 23" unterteilen.

Im Bereich der an der Umfangswand 30 befindlichen Wurzeln der Dichtwände 29 münden auf der konvexen Seite der Dichtwände 29 Verzweigungsleitungen 27 bzw. 28, die von einem gemeinsamen Druckraum 17 ausgehen, der von einer Druckquelle 16 beaufschlagbar ist. Die Druckquelle 16 ist über eine in Fig.3 gestrichelt angedeutete Steuerleitung 42 mit einem ebenfalls nur gestrichelt angedeuteten Beschleunigungssensor 43 verbunden, der bei einer unfallbedingten Fahrzeugbeschleunigung eine pyrotechnische Ladung in der Druckquelle 16 zündet, so daß im Druckraum 17 schlagartig ein Druck aufgebaut werden kann. Auf der konkaven Seite der Dichtwände 29 sind zur umgebenden Atmosphäre führende Entlüftungsöffnungen 37 vorgesehen, die beim Auslösen des Zusatzantriebes 15 einen übermäßigen Druckaufbau in den Teilräumen 23" verhindern.

Die Verzweigungsleitungen 27, 28 münden derart an den Bandlaufräumen 23, daß sie die sich am Umfang der Bandlaufräume 23 quer über die Mündung der Verzweigungsleitungen 27, 28 erstreckenden Zugbänder 21 mit Druck beaufschlagen können.

Auf diese Weise treibt die Drehmomenterzeugungsvorrichtung 18 bei Zündung der pyrotechnischen Ladung 16 die Antriebswelle 19, die zur Aufnahme der Innenwelle 41 hohl ausgebildet ist, in Gurtaufwickelrichtung an.

Zwischen dem Zusatzantrieb 15 mit der Drehmomenterzeugungsvorrichtung 18 und der Gurtaufwickelrolle 12 ist eine im folgenden anhand Fig. 1 beschriebene Kupplung 20 vorgesehen, die normalerweise ausgerückt ist, um ein ungehindertes Zusammenspiel zwischen der Rückzugsfederanordnung 14' und der Gurtaufwickelrolle 12 über die Innenwelle 41 zu gewährleisten. Erst dann, wenn eine unfallbedingte Beschleunigung auftritt und die Drehmomenterzeugungsvorrichtung 18 den Gurt 13 schlagartig straffen soll, muß die Kupplung 20 einrücken, um das von der Drehmomenterzeugungsvorrichtung 18 erzeugte Drehmoment auf die Gurtaufwikkelrolle 12 übertragen zu können.

Nach Fig. list die Antriebsrolle 22 an ihrer von der Drehmomenterzeugungsvorrichtung 18 axial abgewandten Seite mit axial oder radial vorspringenden Keilnocken 55 versehen, welche in dazu komplementäre Umfangsschlitze 56 am Außenrand einer zentralen Bohrung einer Kupplungsscheibe 44 derart eingreifen, daß in Umfangsrichtung zwar ein bestimmtes Spiel zwischen den Keilnocken 55 und den Umfangsberandungen der Umfangsschlitze 56 besteht, daß jedoch die Antriebsrolle 22 nach Überwindung dieses Spiels die Kupplungsscheibe 44 zu einer Drehbewegung mitnimmt.

Auf ihrem Außenumfang weist die Kupplungsscheibe 44 nach Fig. 1 radial nach außen vorspringende und über ihren Umfang verteilte Haltenocken 50 auf, die hinter vom Kupplungsgehäuse 58 radial nach innen in den Aufnahmehohlraum 60 für die Kupplungsscheibe 44 vorspringende Gegennocken 57 greifen, derart, daß die von der Stirnseite der Antriebsrolle 22 oder eines an ihr befestigten Zwischenstückes in Richtung der Gurtaufwickelrolle 12 vorgeschobene Kupplungsscheibe 44 radial außen zunächst von den Gegennocken 57 gegen eine Axialverschiebung festgehalten wird. Die aus federndem Material, insbesondere Federstahl bestehende Kupplungsscheibe 44 ist dabei federnd konisch verformt.

Nach Fig. 1 besitzt die Kupplungsscheibe 44 in ihrem radial äußeren Bereich, jedoch radial innen von den Haltenocken 50 Eingriffsausnehmungen 45, die über den Umfang gleichmäßig verteilt sind. Diesen Eingriffsausnehmungen 45 sind an der der Drehmomenterzeugungsvorrichtung 18 axial zugewandten Stirnführungsscheibe 47 der Gurtaufwickelrolle 12 axial vorstehende Eingriffsnocken 46 zugeordnet, die jedoch in der Position der Kupplungsscheibe 44, wo ihre Haltenocken 50 axial an den Gegennocken 57 anliegen, außer Eingriff mit den Eingriffsausnehmungen 45 sind.

Aufgrund der beschriebenen Anordnung befindet sich die Kupplungsscheibe 44 normalerweise in der ausgerückten Position, so daß die Gurtaufwickelrolle 12 sich ungehindert von der Antriebsrolle 22 frei drehen kann und nur mit der Rückzugsfederanordnung 14' über die Innenwelle 41 zusammenwirkt, die sich durch die Bohrung 67 erstreckt.

Um die Kupplung 20 einzurücken, ist nach Fig. 1 neben der Kupplungsscheibe 44 im Kupplungsgehäuse 58 eine Verschiebeausnehmung 49 angeordnet, die im wesentlichen tangential zur Kupplungsscheibe 44 verläuft. In der Verschiebeausnehmung 49 ist ein ebenfalls tangential verlaufender und in der Verschiebeausnehmung 49 tangential zur Kupplungsscheibe 44 verschiebbarer Schieber 48 angeordnet.

Der Schieber 48 weist oben eine Betätigungsstange 48" und unten einen erweiterten Kolbenbereich 48' mit einer abbrechbaren Ventilwand 59 auf. Unterhalb der unteren Stirnseite des Kolbenbereiches 48' befindet sich die pyrotechnische Ladung 16. Von der Verschiebeausnehmung 49 zweigt in Richtung der Drehmomenterzeugungsvorrichtung 18 ein Druckkanal 61 ab, der mit dem Druckraum 17 in Strömungsverbindung steht.

Bei in der Ausgangsposition befindlichem Schieber 48 versperrt der Kolbenbereich 48' die Verbindung zwischen der pyrotechnischen Ladung 16 und dem Druckkanal 61.

Im oberen Bereich radial gegenüber der Kupplungsscheibe 44 besitzt die Betätigungsstange 48" des Schiebers 48 einen in Richtung auf die Kupplungsscheibe 44 vorspringenden Anschlag 62, der mit einem am Umfang der Kupplungsscheibe 44 vorgesehenen Gegenanschlag 63 derart in Eingriff steht, daß bei einem Verschieben des Schiebers 48 nach oben die Kupplungsscheibe 44 im Uhrzeigersinn verdreht wird.

Die im allgemeinen zylindrisch ausgebildete pyrotechnische Ladung 16 kann gemäß Fig. 1 auf der der Gurtaufwickelrolle 12 zugewandten Seite der Kupplung 20 parallel zu und unter der Gurtaufwickelrolle 12 angeordnet sein. Wesentlich ist, daß bei Zündung der pyrotechnischen Ladung 16 zunächst nur der Schieber 48 und erst nach Einrücken der Kupplung 20 auch die Drehmomenterzeugungsvorrichtung 18 mit Druck beaufschlagt wird.

Die Arbeitsweise des betriebenen Gurtstraffers ist wie folgt:

Wenn der Beschleunigungssensors 43 (Fig. 3) eine unfallbedingte Beschleunigung am Fahrzeug feststellt, löst er über die Steuerleitung 42 die pyrotechnische Ladung 16 aus. Daraufhin beaufschlagt diese zunächst nicht, wie das in den Fig. 3 und 4 aus Veranschaulichungsgründen wiedergegeben ist, die Drehmomenterzeugungsvorrichtung 18, sondern nach Fig. 1 zunächst nur den Kolbenbereich 48' des Schiebers 48, so daß dieser aus der Ruheposition in die Einkupplungsposition verschoben wird und dabei die Kupplungsscheibe 44 zu einer Drehbewegung mitnimmt.

Dadurch verschieben sich die Haltenocken 50 der Kupplungsscheibe 44 in Umfangsrichtung entlang der feststehenden Gegennocken 57, bis diese außer Eingriff miteinander kommen.

Der Verschiebeweg des Schiebers 48 und die Drehbewegung der Kupplungsscheibe 44 sind so berechnet, daß im ersten Stadium der Bewegung die Haltenocken 50 und die Gegennocken 57 außer Eingriff kommen, worauf die Kupplungsscheibe 44 in Richtung der Stirnführungsscheibe 47 schnappt. Hierbei können die Eingriffsnocken 46 in die Eingriffsausnehmungen 45 eingreifen, wenn diese beiden Elemente zufällig axial ausgerichtet sein sollten. Sofern dies noch nicht der Fall sein sollte, legen sich die Stege 69 der Kupplungsscheibe 44 an die Eingriffsnocken 46 an.

Nunmehr wird die Kupplungsscheibe 44 in einem zweiten Stadium der Bewegung des Schiebers 48 weitergedreht, bis schließlich die Eingriffsausnehmungen 45 über die Eingriffsnocken 46 schnappen.

Die Umfangsschlitze 56 müssen eine die beiden Bewegungsstadien ermöglichende Drehung der Kupplungsscheibe 44 relativ zur Antriebsrolle 22 bzw. den Keilnocken 55 zulassen.

Aufgrund der beschriebenen Ausbildung der Kupplung 20 mit zahlreichen über den Umfang verteilten Eingriffsausnehmungen 45 und Eingriffsnokken 46 wird dem Erfordernis der Übertragung erheblicher Drehmomente über die Kupplung 20 Rechnung getragen.

Beim Ausführungsbeispiel nach Fig. 5 erstreckt sich das flexible Zugband 21 mit dem gleichen Krümmungssinn, den es auf der Antriebsrolle 22 aufweist, durch den Bandlaufraum 23 zur radial der Antriebsrolle 22 gegenüberliegenden, vorzugsweise zur Antriebswelle 19 konzentrischen Umfangswand 30, wo es im Bereich der Mündung einer ExplosionsdruckZuleitung 27' im Bandlaufraum 23 bei 26 am Gehäuse 24 befestigt ist.

Zwischen dem Gehäuse 24 und dem Umfang der Antriebsrolle 22 bzw. des darauf aufgewickelten Zugbandes 21 erstreckt sich im wesentlichen parallel zu der Zuleitung 27' und nahe dieser eine Dichtwand 29 zum Umfang der Antriebsrolle 22, wo eine Dichtlippe 29' vorgesehen ist, die am aufgewickelten Zugband 21 dichtend anliegt. Auf diese Weise werden die Teilräume 23', 23" druckmäßig voneinander entkoppelt. Am in Ausbreitungsrichtung des flexiblen Zugbandes 21 peripheren Ende des Bandlaufraums 23 befindet sich außer der Dichtwand 29 auch die Entlüftungsbohrung 37, die über einen Entlüftungskanal 37' in die umgebende Atmosphäre führt.

Wie in Fig. 5 strichpunktiert und in feiner Schraffierung angedeutet ist, weißt die Dichtwand 29 zum Teilraum 23' hin vorzugsweise einen Fortsatz 29" auf, so daß die Dichtlippe 29' in Richtung des Druckraumes 23' etwas verlängert ist. Der Fortsatz 29" ist flexibel ausgebildet und könnte auch gelenkig an der eigentlichen Dichtwand 29 befestigt sein und zwar um eine zur Achse der Antriebswelle 19 parallele Schwenkachse. Auf diese Weise wird die Dichtlippe 29' durch den Druck im Teilraum 23' besonders gut dichtend gegen die Außenfläche des auf die Antriebsrolle 22 aufgewickelten Zugbandes 21 gepreßt.

Fig. 6 zeigt eine ähnliche Ausführungsform wie die Fig. 3 und 4, wobei sich jedoch ähnlich wie beim Ausführungsbeispiel nach Fig. 5 die flexiblen Zugbänder 21 ohne Umkehr des Krümmungssinnes, den sie auf der Antriebsrolle 22 aufweisen, durch die Bandlaufräume 23 zur Umfangswand 30 erstrecken, um dort bei 26 am Gehäuse 24 befestigt zu werden.

Auch bei dieser Ausführungsform sind die Teilräume 23" am peripheren Ende durch eine Entlüftungsbohrung 37 und einen anschließendden Entlüftungskanal 37' zur umgebenden Atmosphäre hin entlüftet.

Der wesentliche Vorteil der Ausführungsform nach den Fig. 5 und 6 besteht darin, daß sich der Druck im druckbeaufschlagten Teilraum 23' bis zur Dichtlippe 29' der Dichtwand bzw. Dichtwände 29 ausbreiten kann, so daß der frei durch die Bandlaufräume 23 verlaufende und für die durch die Druckbeaufschlagung bedingte Zugkrafterzeugung verantwortliche Bereich des flexiblen Zugbands 21 gegenüber dem Ausführungsbeispiel nach den Fig. 3 und 4 erheblich, und zwar beim vorliegenden Ausführungsbeispiel um den Durchmesser der Antriebsrolle 22 vergrößert ist. Bei gleichem Druck wird somit die die Antriebsrolle 22 in Bewegung setzende Zugkraft des flexiblen Zugbandes 21 entscheidend erhöht.

In Fig. 6 ist das flexible Zugband 21 in ausgezogenen Linien am Beginn einer Druckbeaufschlagung dargestellt sowie in gestrichelten Linien in zwei weiter fortgeschrittenen Stadien einer Druckauslösung, bei denen der Sicherheitsgurt bereits stärker gestrafft ist.

Besonders wichtig ist die Längserstreckung der Dichtwände 29 im wesentlichen tangential zur Antriebsrolle 22. Weiter sind erfindungsgemäß die Dichtwände 29 flexibel, d. h. insbesondere elastisch federnd ausgebildet oder beispielsweise bei 29"' gelenkig am Gehäuse 24 befestigt, wobei durch geringfügige Federkräfte die Dichtwände 29 in Richtung auf das auf die Antriebsrolle 22 aufgewickelte flexible Zugband 21 zu vorgespannt sein können, so daß die Dichtlippen 29' leicht gegen die Außenfläche des aufgewickelten Zugbandes 21 angedrückt werden.

Auf diese Weise führt jede Druckbeaufschlagung der den Teilräumen 23' zugewandten Oberfläche der Dichtwände 29 dazu, daß diese mit ihrer Dichtlippe 29' gegen die Außenfläche des auf die Antriebsrolle 22 aufgewickelten Zugbandes 21 gedrückt werden, wodurch zwischen den Dichtlippen 29' und der Antriebsrolle 22 bzw. dem auf sie aufgewickelten Zugband 21 eine mit dem Druck im Teilraum 23' zunehmende Dichtwirkung erzielt wird.

Weiter wird in vorteilhafter Weise das Zugband 21 durch den es beaufschlagenden Druck im zugeordneten Teilraum 23' auch radial von innen nach außen gegen die Dichtlippe 29' angedrückt.

In den folgenden Figuren bezeichnen gleiche Bezugszahlen entsprechende Bauelemente wie in der vorangehenden Beschreibung.

Beim Ausführungsbeispiel nach den Fig. 7 bis 10 ist die Antriebswelle 19 bzw. die Antriebsrolle 22, auf welche das Zugband 21 aufgewickelt ist, als nach unten offener und oben eine zentrale Lageröffnung 92 aufweisender Topf ausgebildet, in dessen zur Drehachse 38 konzentrischem Kupplungshohlraum 100 ein im wesentlichen kreiszylindrischer Kupplungsdrehkörper 65 angeordnet ist, dessen Achse ebenfalls mit der Drehachse 38 konzentrisch ist und welcher auf seinem Umfang mit einer Kupplungseingriffsfläche 66 versehen ist, die als Zahnung mit parallel zur Drehachse 38 verlaufenden Zähnen ausgestaltet ist. Grundsätzlich sind auch andere Oberflächenausgestaltungen möglich, welche den weiter unten beschriebenen Kupplungseingriff gewährleisten. Eine in der Lageröffnung 92 drehbar gelagerte Nabe 84 des Kupplungsdrehkörpers 65 ist in aus Fig. 15 ersichtlicher Weise mit der Gurtaufwickelrolle 12 drehfest verbunden und vorzugsweise auch konzentrisch zu ihr angeordnet. An der in Fig. 7 nicht sichtbaren, von der Nabe 84 abgewandten Stirnseite des Kupplungsdrehkörpers 65 ist die Innenwelle 41 zentral befestigt, welche auch noch eine Lagerfunktion übernehmen kann.

Die als Zahnung ausgebildete Kupplungseingriffsfläche 66 weist einen radialen Abstand von der radial inneren Rotationseingriffsfläche 64 der Antriebsrolle 22 auf, welche mit einer Vielzahl von einzelnen Kulissenflächen 86 versehen ist, die jeweils von einer teilkreisförmigen Vertiefung 87 ausgehen, in denen jeweils ein federnder Kupplungsstift 68 untergebracht ist, der mit seinem Fuß an einer am Gehäuse 24 vorgesehenen Gehäusestirnwand 70 fest angebracht ist. Sowohl die Kupplungsstifte 68 als auch die Vertiefungen 87 verlaufen parallel zur Drehachse 38.

In der Normalposition befinden sich die Kupplungsstifte 68 in Eingriff mit dem Rand der Vertiefungen 87, d.h. mit der Antriebsrolle 22, weisen jedoch einen geringen radialen Abstand von der Kupplungseingriffsfläche 66 auf.

Der genaue Aufbau und die genaue Anordnung der einzelnen Bauelemente ergeben sich aus der folgenden Funktionsbeschreibung des Ausführungsbeispiels nach den Fig. 7 bis 10:

Wenn bei einer unfallbedingten Beschleunigung die Druckquelle 16, d.h. vorzugsweise die pyrotechnische Ladung gezündet wird, wird das Zugband 21 in der oben anhand der Fig. 5 und 6 beschriebenen Weise druckbeaufschlagt, wodurch die Antriebsrolle 22 in Richtung der Pfeile in den Fig. 7 bis 10 in Umlauf versetzt wird.

Dabei gleiten die Kupplungsstifte 68, von denen einer auch in Fig.9 gestrichelt angedeutet ist, entlang der Kulissenflächen 86 in Umfangsrichtung, wobei sie radial nach innen in die Zähne der Kupplungseingriffsfläche 66 hineingedrückt werden. Hierzu müssen die Kupplungsstifte 68 zumindest im Bereich ihrer Wurzel 93, wo sie an der Gehäusestirnwand 70 befestigt sind, federnd oder gelenkartig ausgebildet sein. Es ist auch möglich, die Kupplungsstifte 68 so auszubilden, daß sie bei der Bewegung radial nach innen in ihrem Wurzelbereich abscheren und dadurch radial nach innen in die Zähne der Zahnung 66 verschoben werden können.

Die Kulissenflächen 86 verlaufen schräg soweit radial nach innen, daß die relative Drehbewegung zwischen der Antriebsrolle 22 und dem Kupplungsdrehkörper 65 nach einem Winkel von etwa 10° abgebremst wird, weil nunmehr zwischen der Rotationseingriffsfläche 64 und der gezahnten Kupplungseingriffsfläche 66 über die Vielzahl von Kupplungsstiften 68 eine formschlüssige Kupplung herbeigeführt ist. Von nun ab nimmt die Antriebsrolle 22 den Kupplungsdrehkörper 65 und damit die Gurtaufwickelrolle 12 zu einer schnellen Drehbewegung in Aufwickelrichtung mit.

Die Antriebswelle 19 nach Fig. 7 ist als Kragen an der Antriebsrolle 22 ausgebildet, in deren Lageröffnung 92 die Nabe 84 nach Art eines Drehlagers eingreift.

Bevorzugt verändern sich die Kulissenflächen in axialer Richtung derart, daß die Kupplungsstifte 68 zuerst an dem von der Wurzel 93 abgewandten Ende radial nach innen beaufschlagt werden und dann bei weiterer Drehung der Antriebsrolle 22 mehr und mehr auch in näher der Wurzel 93 liegenden Bereichen. Auf diese Weise werden die Kupplungsstifte 68 zuerst oben und dann mehr und mehr auch weiter unten zur Kupplungseingriffsfläche 66 hin federnd gebogen. Wenn die Kulissenfläche 86 schließlich die Kupplungsstifte 68 auch in der Nähe ihrer Wurzel 93 beaufschlagt und radial einwärts drückt, können die Kupplungsstifte 68 an oder nahe ihrer Wurzel 93 abbrechen bzw. abscheren. Da sie aber gleichzeitig zwischen der Rotationseingriffsfläche 64 und der Kupplungseingriffsfläche 66 eingeklemmt werden, sind sie räumlich nach wie vor eindeutig festgelegt, nunmehr allerdings so, daß sie die Drehbewegung der Antriebsrolle 22 mitmachen.

Damit zum einen das Abscheren der Kupplungsstifte 68 nahe ihrer Wurzel begünstigt und außerdem Platz für die Aufnahme etwaiger Bruchstücke gebildet wird, ist am unteren Rand der Rotationseingriffsfläche 64 eine radial nach außen vorspringende Ringausnehmung 94 vorgesehen, die sich jedoch in axialer Richtung nur um ein relativ kurzes Stück von der Wurzel 93 der Kupplungsstifte 68 wegerstreckt.

Wenn nach erfolgter Gurtstraffung und Abbau des durch die pyrotechnische Ladung erzeugten Druckes der Gurt durch die in den Gurt fallende Person wieder in Auszugsrichtung belastet wird, wird aufgrund der erfolgten Entspannung das flexible Zugband 21 aus der Antriebsrolle 22 ausgehängt, wie das anhand der Fig. 7 und 8 der DE-A-44 44 775 beschrieben ist. Nunmehr ist die Antriebsrolle 22 von dem Zugband 21 gelöst, und der Gurtmechanismus kann wieder in normaler Weise arbeiten, d.h. mit geringer Kraft ausgezogen und durch die Rückzugsfederanordnung wieder eingezogen werden. Lediglich der Antrieb 15 ist nicht mehr funktionsfähig, weil er nur für eine einzige Gurtstraffung ausgelegt ist. Er muß nach einem Unfall jeweils ausgewechselt werden.

Damit auch die von der Stirnwand 70 abgewandten Enden der Kupplungsstifte 68 bei der Montage und auch beim Auslösen einwandfrei gehalten werden, sieht die Ausführungsform nach den Figuren 11 und 12 vor, daß die Kupplungsstifte 68 in dem von der unteren Stirnwand 70 abgewandten Endbereich verlängert sind und in axialer Richtung zunächst Halterungsausnehmungen 102 in einem Zentrierring 98 durchgreifen, welcher radial innen an der Antriebsrolle 22 vorzugsweise einstückig drehfest befestigt ist und radial innen die Lageröffnung 92 für die Nabe 84 der Gurtaufwickelrolle 12 aufweist.

Wie sich insbesondere aus Figur 12 ergibt, sind die Halterungsausnehmungen 102 auf der der Drehrichtung D entgegengesetzten Seite teilweise offen, wobei eine abscherbare Halte-Ausweich-Nase 103 diese Öffnung so weit verschließt, daß die Enden der Kupplungsstifte 68 vom Zentrierring 98 zunächst formschlüssig gehalten werden. Entgegen der Drehrichtung D und im Anschluß an die Halte-Ausweich-Nase 103 geht jede Halterungsausnehmung 102 in eine Radialausnehmung 105 von solcher Größe und Erstreckung über, daß die Kupplungsstifte 68 dort zur Kupplungseingriffsfläche 66 gelangen können.

Nach Figur 11 erstrecken sich die Kupplungsstifte 68 nach dem axialen Durchgreifen der Halterungsausnehmungen 102 oben in Aufnahmeräume 104 eines Deckels 99, der die Rückzugsfederanordnung 14 in Figur 11 unten abschließt.

Nach den Figuren 11 und 12 sind die Aufnahmeräume 104 in Umfangsrichtung durch jeweils eine Anschlagfläche 101 abgeschlossen, welche mit dem die Halterungsausnehmungen 102 durchgreifenden Ende der Kupplungsstifte 68 in peripherem Eingriff steht. Für jeden Kupplungsstift 68 ist ein Aufnahmeraum 104 und eine Anschlagfläche 101 vorgesehen.

Die Arbeitsweise der Ausführungsform nach den Figuren 11 und 12 ist wie folgt:

Bei der Montage werden die in entsprechende Öffnungen der Stirnwand 70 eingesteckten Kupplungsstifte 68 durch die Ausnehmungen 102 im Zentrierring 98 positioniert. Gleichzeitig zentriert der Zentrierring 98 die Antriebsrolle 22 an der Nabe 84.

Durch Eingreifen des von der Stirnwand 70 abgewandten Endes der Kupplungsstifte 68 in die Aufnahmeräume 104 werden die Stifte 68 gleichzeitig axial (in Figur 11 nach oben) positioniert, weil sie in einem geringfügigen Abstand vom Deckel 99 enden.

Wenn jetzt eine Auslösung der Drehmomenterzeugungsvorrichtung 18 erfolgt, d.h. die Antriebsrolle 22 plötzlich in Richtung des Pfeiles D in Figur 12 in Umdrehung versetzt wird, werden die beiden Enden der Kupplungsstifte 68 von der gehäusefesten Stirnwand 70 bzw. den Anschlagflächen 101 des Deckels 99 gegen eine Mitnahme durch den sich nunmehr in Richtung des Pfeiles D in Figur 12 in Bewegung setzenden Zentrierringes 98 festgehalten. Hierdurch scheren die Kupplungsstifte 68 im Bereich ihrer Befestigung an der Stirnwand 70 ab. Weiter werden die Halte-Ausweich-Nasen 103 des Zentrierringes 98 abgeschert, so daß die Kupplungsstifte 68 in den Bereich der Radialausnehmungen 105 des Zentrierringes 98 gelangen und dabei durch die Kulissenflächen 86 (Figur 12) radial nach innen an die durch eine Zahnung gebildete Kupplungseingriffsfläche 66 angepreßt werden. Hierzu sollen die Anschlagflächen 101 in sich axial erstreckenden Radialebenen bezüglich der Achse 38 angeordnet sein.

Die Ausführungsform nach den Figuren 11 und 12 gewährleistet also einen besonders guten Halt sowie eine besonders definierte Einsteuerung der Kupplungsstifte 68 im Auslösefall.

## Patentansprüche

1. Einen Gurtstraffer aufweisende Sicherheitsgurtnordnung für Kraftfahrzeugen mit einem am Fahrzeugchassis zu befestigenden Halter (11), an dem drehbar eine Gurtaufwickelrolle (12) mit einem darauf aufgewickelten Sicherheitsgurt (13), eine Rückzugsfederanordnung (14, 14'), mittels der der Sicherheitsgurt (13) ständig in Einziehrichtung leicht so vorgespannt ist, daß er nur locker am von ihm gesicherten Fahrzeuginsassen anliegt, einer Feststellanordnung, insbesondere zwischen Gurtaufwickelrolle (12) und Halter (11) oder Fahrzeugchassis, welche den Sicherheitsgurt (13) bei plötzlichem Anziehen und/oder einer unfallbedingten Beschleunigung gegen Ausziehen sperrt, und mit einem über eine Kupplung (20) an die Gurtaufwickelrolle (12) angeschlossenen Zusatzantrieb (15), welcher normalerweise durch die ausgerückte Kupplung (20) von der Gurtaufwickelrolle (12) antriebsmäßig getrennt ist, jedoch bei einer unfallbedingten Beschleunigung schlagartig aktiviert und über die dann eingerückte Kupplung (20) drehfest mit der Gurtaufwickelrolle (12) gekuppelt wird, um den Sicherheitsgurt (13), noch bevor der von ihm gesicherte Fahrzeuginsasse in den Sicherheitsgurt (13) hineinfällt, um ein solches Wegstück aufzurollen, daß der Sicherheitsgurt straff am Fahrzeuginsassen anliegt, wobei der Zusatzantrieb (15) eine beim unfallbedingten Ansprechen eines Beschleunigungssensors auslösbare bzw. zündbare, insbesondere pyrotechnische Druckquelle (16), welche bei Auslösung in einem Druckraum (17) schlagartig einen hohen Druck aufbaut, eine von dem Druck im Druckraum (17) beaufschlagte Drehmomenterzeugungsvorrichtung (18) und eine an diese angeschlossene Antriebswelle (19) bzw. Antriebsrolle (22) aufweist, die über die Kupplung (20) drehfest mit der Gurtaufwickelrolle (12) verbindbar ist, wobei die Drehmomenterzeugungsvorrichtung (18) wenigstens ein flexibles Zugband (21), welches insbesondere aus Federstahl besteht, aufweist, das einerseits am Umfang der Antriebswelle (19) oder einer konzentrisch darauf angebrachten Antriebsrolle (22) an einer ersten Befestigungsstelle (25) befestigt und teilweise auf die Antriebswelle (19) bzw. die Antriebsrolle (22) aufgewickelt ist und andererseits an der Umfangswand (30) eines um die Antriebswelle (19) bzw. die Antriebsrolle (22) herum angeordneten, eine der Breite des Zugbandes (21) entsprechende Breite aufweisenden Bandlaufraumes (23) innerhalb eines Gehäuses (24) an einer zweiten Befestigungsstelle (26) befestigt ist, derart, daß sich das Zugband (21) - den Bandlaufraum (23) in zwei voneinander abgedichtete Teilräume (23', 23") unterteilend - durch den Bandlaufraum (23) erstreckt, und wobei der Teilraum (23'), der bei Druckbeaufschlagung eine Abwicklung des Zugbandes (21) von der sich drehenden Antriebswelle (19) bzw. Antriebsrolle (20) bewirkt, an den Druckraum (17) angeschlossen und der andere Teilraum (23") vorzugsweise entlüftet (37) ist, und wobei zur druckmäßigen Entkopplung der Teilräume (23',23") wenigstens eine sich zwischen dem Gehäuse (24) und dem Umfang der Antriebswelle (19) bzw. der konzentrisch darauf angebrachten Antriebsrolle (22) bzw. dem darauf aufgewickelten flexiblen Zugband (21) erstreckende Dichtwand (29) vorgesehen ist,
dadurch gekennzeichnet,
daß die Antriebswelle (19) bzw. die Antriebsrolle (22) einen Kupp- lungshohlraum (100) enthält, dessen Umfangswand als Rotationseingriffsfläche (64) ausgebildet ist und in dem ein mit der Gurtaufwickelrolle (12) drehfest verbundener Kupplungsdrehkörper (65) konzentrisch angeordnet ist, dessen Umfangswand als Kupplungseingriffsfläche (66) ausgebildet ist, und daß zwischen der Rotationseingriffsfläche (64) und der Kupplungseingriffsfläche (66) ein Zwischenraum belassen ist, in dem normalerweise mit der Kupplungseingriffsfläche (66) außer Eingriff stehende Kupplungselemente (68) angeordnet sind, die einen drehfesten Kupplungseingriff zwischen der Rotationseingriffsfläche (64) und der Kupplungseingriffsfläche (66) herstellen, wenn die Antriebswelle (19) bzw. die Antriebsrolle (22) im Falle einer Auslösung der Druckquelle (16) einen Drehvorgang beginnen,
daß die Kupplungselemente radial beweglich gehaltene Kupplungsstifte (68) sind, die sich axial in den Zwischenraum erstrecken und mit der Rotationseingriffsfläche (64) zumindest annähernd in Kontakt stehen sowie aufgrund einer Kulissenausbildung der Rotationseingriffsfläche (64) bei Beginn von deren Drehung im Falle einer Auslösung der Druckquelle (16) von der Rotationseingriffsfläche (64) radial nach innen gegen die Kupplungseingriffsfläche (66) bewegt werden und derart zwischen der Rotationseingriffsfläche (64) und der Kupplungseingriffsfläche (66) eingeklemmt bzw. eingerastet werden, daß zwischen der Rotationseingriffsfläche (64) und der Kupplungseingriffsfläche (66) ein vorzugsweise formschlüssiger drehfester Kupplungseingriff vorliegt und daß die Kupplungsstifte (68) sich von einer dem einseitig offenen Kupplungshohlraum (100) gegenüberliegenden Gehäuseinnenwand (70) axial in den Zwischenraum erstrekken.

2. Sicherheitsgurtanordnung nach Anspruch 1,
dadurch gekennzeichnet,
daß die Kupplungsstifte (68) relativ zu ihrer Haltung (70; 102, 103) bei vorbestimmter Beanspruchung während einer Auslösung lösbar, insbesondere abscherbar ausgebildet sind.

3. Sicherheitsgurtanordnung nach Anspruch 2,
dadurch gekennzeichnet,
daß die Kupplungsstifte (68) in dem von der Stirnwand (70) axial abgewandten Endbereich zunächst in Ausnehmungen (102) eines mit der Antriebswelle (19) bzw. Antriebsrolle (22) drehfest verbundenen Zentrierringes (98) in Umfangrichtung auslösbar gehaltert und axial anschließend mit gehäusefesten Anschlagflächen (102) derart in peripherem Eingriff stehen, daß bei beginnender Verdrehung der Antriebswelle (19) bzw. der Antriebsrolle (22) und dadurch bedingter Mitnahme der Kupplungsstifte (68) die Halterung der Kupplungsstifte (68) am Zentrierring (98) gelöst wird und die Kupplungsstifte (68) relativ zum Zentrierring (98) in eine Winkelposition kommen, wo sie radial nach innen zur Kupplungseingriffsfläche (66) hin verschoben werden können.

4. Sicherheitsgurtanordnung nach Anspruch 3,
dadurch gekennzeichnet,
daß die Halterungsausnehmung (102) auf der der Drehrichtung des Zentrierringes (98) entgegengesetzten Seite durch eine Halte-Ausweich-Nase (103) zumindest teilweise verschlossen ist, welche bei beginnender Drehung des Zentrierringes (98) federnd ausweicht oder abgeschert wird und so die Kupplungsstifte (68) freigibt.

5. Sicherheitsgurtanordnung nach Anspruch 3 oder 4,
dadurch gekennzeichnet,
daß die Anschlagsflächen (101) axial von einem Deckel (99) vorspringen und zwischen in Umfangsrichtung aufeinanderfolgenden Anschlagflächen (101) ein Aufnahmeraum (104) für die Enden der Kupplungsstifte (68) vorgesehen ist.

6. Sicherheitsgurtanordnung nach einem der vorhergehenden Ansprüche,
dadurch gekennzeichnet,
daß über den Umfang vorzugsweise gleichmäßig verteilt vier bis 16, insbesondere sechs bis 12 und besonders bevorzugt etwa acht Kupplungsstifte (68) vorgesehen sind.

7. Sicherheitsgurtanordnung nach einem der vorhergehenden Ansprüche,
dadurch gekennzeichnet,
daß die Kupplungseingriffsfläche (66) mit axial verlaufenden Zähnen versehen ist und daß die Kupplungsstifte (68) formschlüssig in die Zahnvertiefungen passen.

## Claims

1. A safety belt arrangement for motor vehicles having a belt tensioner comprising a holder (11) to be secured to the vehicle chassis and on which a belt winding reel (12) with a safety belt (13) wound thereon is rotatably attached, a retraction spring arrangement (14, 14') by means of which the safety belt (13) is continuously lightly biased in the draw-in direction so that it only loosely contacts the vehicle occupant secured by it, a fixing device, in particular between the belt winding reel (12) and the holder (11) or the vehicle chassis, which blocks the safety belt (13) against being pulled out when tightened suddenly and/or in the event of an acceleration caused by an accident, and an additional drive (15) connected via a clutch (20) to the belt winding reel (12), the additional drive normally being separated drive-wise from the belt winding reel (12) by the disengaged clutch (20), but being abruptly activated in the event of an acceleration caused by an accident and being coupled via the then engaged clutch (20) in a rotationally fixed manner to the belt winding reel (12) in order to roll up the safety belt (13) by an amount such that before the vehicle occupant secured by it falls into the safety belt, the safety belt tightly contacts the vehicle occupant, with the additional drive (15) having a pressure source (16), in particular a pyrotechnic pressure source, which can be triggered or ignited by the accident-dependent response of an acceleration sensor, which abruptly builds up a high pressure in a pressure space (17) on being triggered, a torque generating device (18) acted on by the pressure in the pressure space (17), and a drive shaft (19) or drive reel (22) connected to the torque generating device and connectable to the belt winding reel (12) in a rotationally fixed manner via the clutch (20), with the torque generating device (18) having at least one flexible draw band (21), which in particular consists of spring steel, which is secured, on the one hand, to the periphery of the drive shaft (19) or the drive reel (22) concentrically mounted thereon, at a first point of attachment (25) and is partly wound onto the drive shaft (19) or onto the drive reel (22), and, on the other hand, is secured at a second point of attachment (26) to the peripheral wall (30) of a band running chamber (23) within a housing (24) and arranged around the drive shaft (19) or the drive reel (22) and having a width corresponding to the width of the draw band (21) such that the draw band (21) extends through the band running chamber (23) - while diving the band running chamber (23) into two part chambers (23', 23") sealed off relative to one another - and wherein the part chamber (23') which, on being exposed to pressure, brings about an unwinding of the draw band (21) from the rotating drive shaft (19) or drive reel (20), is connected to the pressure space (17) and the other part chamber (23") is preferably vented (37), and wherein for the pressure-wise decoupling of the part chambers (23', 23") at least one sealing wall (29) is provided extending between the housing (24) and the periphery of the drive shaft (19), or the drive reel (22) concentrically mounted thereon or the flexible draw band (21) wound thereon respectively,
characterised in that
the drive shaft (19) or the drive reel (22) contains a hollow coupling space (100) whose peripheral wall is formed as a rotary engagement surface (64) and in which a rotary clutch member (65) rotationally fixedly connected to the belt winding reel (12) is concentrically arranged, with its peripheral wall being formed as a clutch engagement surface (66), in that an intermediate space is left between the rotary engagement surface (64) and the clutch engagement surface (66) in which coupling elements (68), which are normally out of engagement with the clutch engagement surface (66), are arranged, which produce a rotationally fixed coupling engagement between the rotary engagement surface (64) and the clutch engagement surface (66) when the drive shaft (19) or the drive reel (22) starts a rotary process in the event of triggering of the pressure source (16);
in that the coupling elements are radially movably held coupling pins (68) which extend axially into the intermediate space and which are at least approximately in contact with the rotary engagement surface (64) and, as the rotary engagement surface (64) is formed as a link, also move radially inwardly against the clutch engagement surface (66) on the start of their rotation in the case of a triggering of the pressure source (16) and are clamped or latched between the rotary engagement surface (64) and the clutch engagement surface (66) in such a way that a preferably form-locked rotationally fixed coupling engagement is present between the rotary engagement surface (64) and the clutch engagement surface (66), and in that the coupling pins (68) extend axially into the intermediate space from a housing inner wall (70) lying opposite to the hollow coupling space (100) which is open at one side.

2. A safety belt arrangement in accordance with claim 1, characterised in that the coupling pins (68) are releasable relative to their holder (70; 102, 103) with a predetermined loading during a triggering, and in particular are designed to be sheared off.

3. A safety belt arrangement in accordance with claim 2, characterised in that the coupling pins (68) are initially releasably held in the peripheral direction in the end region axially remote from the end wall (70) in recesses (102) of a centering ring (98), which is rotationally fixedly connected to the drive shaft (19) or the drive reel (22), and which are subsequently axially in peripheral engagement with fixed abutment surfaces (102) of the housing in such a way that, on the start of rotation of the drive shaft (19) or drive reel (22), and on the co-movement of the coupling pins (68) caused thereby, the mounting of the coupling pins (68) at the centering ring (98) is released and the coupling pins (68) come into an angular position relative to the centering ring (98) where they can be displaced radially inwardly towards the clutch engagement surface (66).

4. A safety belt arrangement in accordance with claim 3, characterised in that the mounting recess (102) is at least partially closed at the side opposite to the direction of rotation of the centering ring (98) by a holding/deviating nose (103) which, at the start of rotation of the centering ring (98) resiliently deflects or is sheared off and thus releases the coupling pins (68).

5. A safety belt arrangement in accordance with claim 3 or claim 4,
characterised in that the abutment surfaces (101) project axially from a cover (99) and a receiving space (104) for the ends of the coupling pins (68) is provided between abutment surfaces (101) which follow one another in the peripheral direction.

6. A safety belt arrangement in accordance with one of the preceding claims, characterised in that four to sixteen, in particular six to twelve and particularly preferably about eight coupling pins (68) are provided which are preferably uniformly distributed around the periphery.

7. A safety belt arrangement in accordance with one of the preceding claims, characterised in that the clutch engagement surface (66) is provided with axially extending teeth, and in that the coupling pins (68) fit in form-locked manner into the tooth recesses.

## Revendications

1. Dispositif de ceinture de sécurité pour véhicules automobiles avec tensionneur de ceinture, comportant un élément de retenue (11) à fixer sur le châssis de véhicule, sur lequel est agencé en rotation un rouleau d'enroulement de ceinture (12) avec une ceinture de sécurité (13) enroulée sur celui-ci, un dispositif ressort de rappel (14, 14') au moyen duquel la ceinture de sécurité (13) est constamment légèrement tendue en direction de rétraction, de manière à s'appliquer seulement de façon lâche contre le passager qu'elle protège, un dispositif d'arrêt qui est agencé en particulier entre le rouleau d'enroulement de ceinture (12) et l'élément de retenue (11) ou le châssis de véhicule et qui bloque la ceinture de sécurité (13) à l'encontre d'une extraction lors d'une traction brusque et/ou lors d'une accélération due à un accident, et comportant un entraînement supplémentaire (15) qui est raccordé via un accouplement (20) au rouleau d'enroulement de ceinture (12) et qui, sur le plan de l'entraînement, est normalement séparé du rouleau d'enroulement de ceinture (12) par l'accouplement débrayé (20), mais qui est brusquement activé lors d'une accélération due à un accident et qui est alors accouplé solidairement en rotation au rouleau d'enroulement de ceinture (12) via l'accouplement (20) alors embrayé, afin d'enrouler la ceinture de sécurité (13), encore avant que le passager qu'elle protège tombe dans la ceinture de sécurité (13), sur un trajet tel que la ceinture de sécurité s'applique de façon tendue contre le passager, l'entraînement supplémentaire (15) comprenant une source de pression (16) susceptible d'être déclenchée ou amorcée lors dd déclenchement, du à un accident, d'un détecteur d'accélération, en particulier une source pyrotechnique, laquelle établit lors de son déclenchement brusquement une haute pression dans une chambre de pression (17), un dispositif (18) générant un couple de rotation sollicité par la pression dans la chambre de pression (17), et un arbre d'entraînement (18) ou un rouleau d'entraînement (22) raccordé audit dispositif et susceptible d'être relié solidairement en rotation au rouleau d'enroulement de ceinture (12) via l'accouplement (20), le dispositif (18) générant un couple de rotation comprenant au moins un ruban de traction flexible (21) constitué en particulier en acier-ressort, lequel est fixé d'une part à un premier emplacement de fixation (25) sur la périphérie de l'arbre d'entraînement (19) ou sur un rouleau d'entraînement (22) agencé concentriquement sur celui-ci, et enroulé en partie sur l'arbre d'entraînement (19) ou sur le rouleau d'entraînement (22), et lequel est fixé d'autre part à l'intérieur d'un boîtier (24) à un second emplacement de fixation (26) sur la paroi périphérique (30) d'une chambre de déplacement de ruban (23) agencée autour de l'arbre d'entraînement (19) ou du rouleau d'entraînement (22) et présentant une largeur qui correspond à la largeur du ruban de traction (21), de telle sorte que le ruban de traction (21) traverse la chambre de déplacement de ruban (23) de manière à subdiviser la chambre de déplacement de, ruban (23) en deux chambres partielles (23', 23") étanchées l'une vis-à-vis de l'autre, parmi lesquelles la chambre partielle (23') qui provoque lors de l'alimentation en pression un déroulement du ruban de traction (21) depuis l'arbre d'entraînement (19) ou rouleau d'entraînement (22) en rotation est raccordée à la chambre de pression (17), et l'autre chambre partielle (23") est de préférence mise à l'air (37), et dans lequel est prévue, dans le but d'un désaccouplement des chambres partielles (23', 23") vis-à-vis de la pression, au moins une paroi d'étanchéité (29) qui s'étend entre le boîtier (24) et la périphérie de l'arbre d'entraînement (19) ou du rouleau d'entraînement (22) agencé concentriquement sur celui-ci ou le ruban de traction flexible (21) enroulé sur celui-ci,
caractérisé en ce que
l'arbre d'entraînement (19) ou le rouleau d'entraînement (22) comprend une cavité d'accouplement (100) dont la paroi périphérique est réalisée sous forme de surface d'engagement en rotation (64) et dans laquelle est agencé concentriquement un corps tournant d'accouplement (65) relié solidairement en rotation au rouleau d'enroulement de ceinture (12), dont la paroi périphérique est réalisée sous forme de surface d'engagement d'accouplement (66), et en ce qu'un intervalle est laissé entre la surface d'engagement en rotation (64) et la surface d'engagement d'accouplement (66), dans lequel sont agencés des éléments d'accouplement (68) normalement dégagés de la surface d'engagement d'accouplement (66), qui établissent un engagement d'accouplement solidaire en rotation entre la surface d'engagement en rotation (64) et la surface d'engagement d'accouplement (66), lorsque l'arbre d'entraînement (19) ou le rouleau d'entraînement (22) commence à tourner en cas de déclenchement de la source de pression (16),
en ce que les éléments d'accouplement sont des tiges d'accouplement (68) retenues de façon radialement mobile, qui s'étendent axialement dans l'intervalle, qui sont au moins approximativement en contact avec la surface d'engagement en rotation (64) et qui sont déplacées radialement depuis la surface d'engagement en rotation (64), au début de sa rotation en cas d'un déclenchement de la source de pression (16), vers l'intérieur contre la surface d'engagement d'accouplement (66) en raison d'une réalisation en coulisse de la surface d'engagement en rotation (64), et qui sont coincées ou enclenchées entre la surface d'engagement en rotation (64) et la surface d'engagement d'accouplement (66) de telle sorte qu'un engagement d'accouplement solidaire en rotation et de préférence par coopération de formes se présente entre la surface d'engagement en rotation (64) et la surface d'engagement d'accouplement et que les tiges d'accouplement (68) s'étendent depuis une paroi intérieure de boîtier (70), opposée à la cavité d'accouplement (100) ouverte sur un côté, axialement jusque dans l'intervalle.

2. Dispositif de ceinture de sécurité selon la revendication 1, caractérisé en ce que les tiges d'accouplement (68) sont réalisées de manière à pouvoir être détachées, en particulier cisaillées vis-à-vis de leur monture (70 ; 102, 103) lors d'une sollicitation prédéterminée pendant un déclenchement.

3. Dispositif de ceinture de sécurité selon la revendication 2, caractérisé en ce que les tiges d'accouplement (68) sont montées de façon déclenchable en direction périphérique, dans la zone d'extrémité axialement détournée de la paroi frontale (70), tout d'abord dans des évidements (102) d'une bague de centrage (98) reliée solidairement en rotation à l'arbre d'entraînement (19) ou au rouleau d'entraînement (22), et elles se trouvent ensuite axialement en engagement périphérique avec des surfaces de butée (102) solidaires du boîtier, de telle sorte que lorsque l'arbre d'entraînement (19) ou le rouleau d'entraînement (22) commence à tourner et que les tiges d'accouplement (68) sont de ce fait entraînées, la monture des tiges d'accouplement (68) sur la bague de centrage (98) est détachée et les tiges d'accouplement (68) parviennent dans une position angulaire par rapport à la bague de centrage (98), dans laquelle elles peuvent être déplacées radialement vers l'intérieur vers la surface d'engagement d'accouplement (66).

4. Dispositif de ceinture de sécurité selon la revendication 3, caractérisé en ce que sur le côté opposé à la direction de rotation de la bague de centrage (98), l'évidement de montage (102) est du moins partiellement refermé par un bec de maintien effaçable (103) qui, lorsque la bague de centrage (98) commence à tourner, s'efface élastiquement ou bien est cisaillé et libère ainsi les tiges d'accouplement (68).

5. Dispositif de ceinture de sécurité selon l'une ou l'autre des revendications 3 et 4, caractérisé en ce que les surfaces de butée (101) font saillie axialement d'un couvercle (99), et en ce qu'il est prévu une chambre de réception (104) pour les extrémités des tiges d'accouplement (68) entre les surfaces de butée (101) qui se succèdent en direction périphérique.

6. Dispositif de ceinture de sécurité selon l'une quelconque des revendications précédentes, caractérisé en ce qu'il est prévu de préférence en répartition régulière sur la périphérie quatre à seize, en particulier six à douze et de préférence huit tiges d'accouplement (68).

7. Dispositif de ceinture de sécurité selon l'une quelconque des revendications précédentes, caractérisé en ce que la surface d'engagement d'accouplement (66) est pourvue de dents qui s'étendent axialement, et en ce que les tiges d'accouplement (68) s'adaptent en coopération de formes dans les entredents.
